# EUROPÄISCHE PATENTSCHRIFT

(11) **EP 2 431 768 B1**
(45) Veröffentlichungstag und Bekanntmachung des Hinweises auf die Patenterteilung: **05.03.2014**
(21) Anmeldenummer: 11173171.7
(22) Anmeldetag: 08.07.2011
(51) Int. Cl.: G01V 8/20

(54) **Lichtgitter**
Light grid
Barrière lumineuse

(30) Priorität: 21.09.2010 DE 102010037681
(43) Veröffentlichungstag der Anmeldung: 21.03.2012
(73) Patentinhaber: SICK AG, 79183 Waldkirch (DE)
(72) Erfinder: Bürger, Jürgen, 79331 Nimburg (DE); Kietz, Daniel, 79359 Riegel (DE)
(74) Vertreter: Hehl, Ulrich

(56) Entgegenhaltungen:
- EP-A2- 1 933 174
- EP-A2- 2 071 363
- DE-A1- 3 803 033
- DE-B3-102006 052 097
- DE-B3-102007 044 679
- GB-A- 2 023 282

## Beschreibung

Die Erfindung betrifft ein Lichtgitter und ein Verfahren zur Objektvermessung mit einem Lichtgitter nach dem Oberbegriff von Anspruch 1 beziehungsweise 10.

Lichtgitter umfassen eine Vielzahl von Sendeelementen und zugeordneten Empfangselementen, so dass jeweils ein Paar aus einem Sendeelement und einem Empfangselement eine Lichtschranke bildet, die erkennt, ob der zwischen dem Sendeelement und dem Empfangselement aufgespannte Lichtstrahl von einem Objekt unterbrochen ist oder nicht. Die Sendeelemente und Empfangselemente sind jeweils in einer Sendeeinheit und einer Empfangseinheit zusammengefasst, die einander gegenüber montiert werden.

Ein wichtiges Anwendungsfeld für Lichtgitter ist die Sicherheitstechnik. Die parallelen Lichtstrahlen dienen dabei als eine Art virtuelle Wand, und bei Unterbrechung durch ein Objekt wird beispielsweise eine Gefahrenquelle abgesichert. In der Automatisierungstechnik werden Lichtgitter eingesetzt, um die Ausdehnung von Objekten anhand der Anzahl unterbrochener Strahlen zu messen. Beispielsweise kann auf diesem Weg die Höhe von auf einem Förderband bewegten Objekten bestimmt werden, und zwar mit einer Genauigkeit, die durch den Abstand der Lichtstrahlen gegeben ist.

Die Vorstellung eines Lichtstrahls der einzelnen Sendelemente ist idealisiert. Tatsächlich entstehen in Abhängigkeit von den Öffnungswinkeln der strahlformenden Optiken Sende- und Empfangskeulen. Bei üblichen Abständen zwischen Sendeeinheit und Empfangseinheit ist oft nicht zu vermeiden, dass aufgrund der Sendestrahldivergenz ein Empfangselement Sendelicht nicht nur von dem zugeordneten Sendeelement, sondern auch von dessen Nachbarn empfängt. Um Fehlauswertungen zu vermeiden, werden deshalb die Sendeelemente zyklisch aktiviert. Dabei werden nacheinander von jedem Sendeelement einzelne Lichtpulse oder Pakete ausgesandt, und für ein gewisses Zeitfenster wird nur das zugehörige Empfangselement aktiviert, um festzustellen, ob sich in dem jeweilige Kanal ein Objekt befindet.

Die Empfangseinheit muss hierfür die Zeitfenster kennen, in denen jeweils ein Sendeelement aktiv ist, und auch wissen, welches Sendeelement in diesem Zeitfenster sendet. Deshalb sind Sendeeinheit und Empfangseinheit aufeinander zu synchronisieren. Dabei sind Leitungssynchronisation und optische Synchronisation zu unterscheiden.

Unter Leitungssynchronisation werden alle Verfahren verstanden, die eine kontinuierliche Verbindung zwischen Sendeeinheit und Empfangseinheit nutzen und die somit unabhängig von den Lichtstrahlen ist. Dabei wird beispielsweise über eine direkte Leitungsverbindung oder eine Funkverbindung der Beginn eines Auswertungszyklus' kommuniziert. Dieses Vorgehen wird bei messenden Automatisierungslichtgittern gewählt, bei denen es darauf ankommt, jederzeit bei beliebiger Kanalabdeckung den Zustand des Strahlengangs zu erkennen. Nachteilig sind aber der höhere Montage- und Verkabelungsaufwand beim Anwender und die höheren Herstellkosten.

Optische Synchronisation nutzt die ohnehin vorhandene Verbindung zwischen Sendeeinheit und Empfangseinheit, nämlich die Lichtstrahlen. Dabei ist die Datenrichtung in aller Regel unidirektional, wobei die Sendeeinheit als Master fungiert. Es sind verschiedene Verfahren für die optische Synchronisation bekannt. Meist wird dabei ein Kanal als dedizierter Synchronisationskanal ausgezeichnet. Befindet sich in diesem Kanal ein Objekt, so scheitert die Synchronisation und damit die zuverlässige Funktion des messenden Lichtgitters.

Bei schaltenden Systemen, die also lediglich die Anwesenheit eines Objekts im Überwachungsbereich des Lichtgitters erkennen, wirkt sich dies kaum nachteilig aus. Hier führt der unterbrochene Synchronisationskanal korrekt zu einer Anwesenheitserkennung, und es ist für das reine binäre Objektfeststellungssignal unerheblich, ob auch weitere Kanäle unterbrochen sind. Soll aber festgestellt werden, welche Lichtstrahlen unterbrochen sind, so muss der Synchronisationskanal stets freigehalten bleiben.

Es gibt eine Reihe von herkömmlichen Ansätzen zur optischen Synchronisation. Sie erfordern aber entweder eine aufwändige Codierung, die zu langen Zyklen führt oder die Synchronisation ist langsam, weil sie mehrerer Zyklen bedarf.

Aus der DE 100 46 136 A1 ist eine Vorrichtung zur Identifizierung von Lichtschrankensendern bekannt. Dabei spricht der Lichtempfänger nur auf den Lichtsender an, der zyklisch ein bestimmtes Datenmuster sendet, um auszuschließen, dass ein Empfänger auf einen nicht zugehörigen Sender reagiert. Das Dokument erläutert aber nicht, auf welche Weise die Synchronisation erfolgt.

In der DE 10 2006 059 370 A1 wird in der Empfangseinheit eines Lichtgitters das Empfangsmuster mit einem Referenzmuster korreliert. Damit wird zur Synchronisation eine Phasenlage gewonnen, um welche die Muster gegeneinander versetzt sind. Diese Art der Synchronisation funktioniert nur, wenn ein Objekt eine hinreichende Anzahl von Kanälen für eine verlässliche Korrelation frei lässt.

Die DE 10 2005 047 776 B4 beschreibt ein Verfahren zum Betrieb eines Lichtgitters, bei dem jeder Lichtstrahl zur optischen Synchronisation eine eindeutige Kennung verwendet. Sobald ein Empfänger seine Kennung registriert hat, ist die Synchronisation erfolgt. Nachteilig ist, dass für die individuelle Kennung eine entsprechend mächtige Codierung der Sendesignale in den Kanälen erforderlich ist. Dies führt zu einer verhältnismäßig langen Sendedauer und in deren Folge zu einer langsamen Zykluszeit und einer hohen Stromaufnahme des Senders. Eine individuelle Kennung je Strahlachse verwendet auch die DE 43 38 978 C2.

Aus der DE 10 2007 044 679 B3 ist ein Konfigurationsmittel für Sicherheitslichtgitter bekannt. Dazu wird ein Teil der Lichtstrahlen mit Hilfe einer Schablone abgedeckt, und die einzustellende Konfiguration wird aus dem Muster der abgedeckten und nicht abgedeckten Lichtstrahlen erkannt. Im Rahmen der Erläuterung der allgemeinen Funktionsweise eines Sicherheitslichtgitters erwähnt die DE 10 2007 044 679 B3, dass die Lichtsender und Lichtempfänger auf optischem Wege über beispielsweise die erste und/oder letzte Lichtschranke synchronisiert werden, so dass immer der dem momentan sendenden Lichtsender gegenüberliegender Lichtempfänger aktiv ist. Ebenso offenbart die DE 3803 033 ein entsprechendes Lichtgitter.

Es ist daher Aufgabe der Erfindung, eine robuste und einfache optische Synchronisation in einem Lichtgitter zu ermöglichen.

Diese Aufgabe wird durch ein Lichtgitter gemäß Anspruch 1 und ein Verfahren zur Objektvermessung mit einem Lichtgitter gemäß Anspruch 10 gelöst. Dabei geht die Lösung von dem Grundgedanken aus, mehrere oder sogar alle Kanäle eines Lichtgitters für die Synchronisation zu verwenden. Anders als im Stand der Technik werden dabei die Einzellichtsender nicht ausschließlich nacheinander aktiviert, sondern senden für das Synchronisationssignal parallel, d. h. zeitlich überlappend und insbesondere gleichzeitig. Dabei ist das Synchronisationssignal ein beliebiger Puls oder eine Pulsfolge, anhand derer die Auswertungseinheit erkennt, dass es sich um ein solches handelt. Die Identität des Kanals dagegen wird nicht in das Synchronisationssignal codiert, vorzugsweise wird auf allen Kanälen das identische Synchronisationssignal verwendet.

Dadurch kann ein sehr einfacher Code verwendet werden, wobei es sogar genügt, wenn es sich um einen Einzelpuls handelt.

Die Erfindung hat den Vorteil, dass eine optische Synchronisation auch dann erfolgt, wenn eine beliebige Anzahl von Kanälen durch ein Objekt im Überwachungsbereich abgedeckt ist. Selbst wenn alle Kanäle unterbrochen sind, wird ein eindeutiger Zustand erkannt, nämlich dass es offenbar ein Objekt gibt, welches sämtliche Lichtstrahlen abdeckt. In diesem Fall ist zwar keine Synchronisation mehr möglich, aber es wird trotzdem das korrekte Messergebnis geliefert. Dabei entfällt eine komplexe individuelle Strahlcodierung der einzelnen Kanäle, da lediglich der Zyklusanfang über das Synchronisationssignal codiert wird. Somit wird eindeutig und mit kurzer Zykluszeit der Strahlstatus bei beliebig unterbrochenen Strahlen erkannt. Die Synchronisation erfolgt dabei innerhalb eines Zyklus'.

Die Sendersteuerung ist bevorzugt dafür ausgebildet, mit den Einzellichtsendern jeweils ein Objekterkennungssignal mit einem für jeden Einzellichtsender unterschiedlichen Zeitversatz zu dem Synchronisierungssignal auszusenden. Die Objekterkennungssignale sind die eigentlichen Betriebssignale des Lichtgitters, mit denen Objekte im Lichtstrahl erkannt werden. Sie werden zur Vermeidung von Fehlzuordnungen zwischen Einzellichtsender und Einzellichtempfänger in einem Zeitmultiplexverfahren zueinander versetzt ausgesandt. Das Objekterkennungssignal unterscheidet sich in seiner Codierung von dem Synchronisationssignal. Es wird aber vorzugsweise auf allen Kanälen dasselbe Objekterkennungssignal verwendet, so dass keine individuelle Kanalkennung erforderlich ist. Somit kann eine sehr einfache, kurze Codierung verwendet werden.

Das Sendesignal des i-ten Einzellichtsenders weist bevorzugt das Synchronisierungssignal und ein hierzu um i Zeiteinheiten verzögertes Objekterkennungssignal auf. Somit verteilen sich die Objekterkennungssignale gleichmäßig auf das Zeitintervall nach dem Synchronisationssignal, wobei die Kanäle beispielsweise von oben nach unten entsprechend ihrer Anordnung in dem Lichtgitter aktiviert werden. Dies ist ein einfaches, logisch gut nachvollziehbares Aktivierungsschema. Die Nummerierung der Kanäle kann aber auch von der genannten einfachen Reihenfolge abweichen, und ebenso sind unregelmäßige Zeitabstände zwischen den einzelnen Kanälen denkbar.

Die Signalform des Synchronisierungssignals und/oder des Objekterkennungssignals ist bevorzugt für alle Einzellichtsender identisch. Die Signalform, also der Amplitudenverlauf der Sendesignale, ermöglicht eine Codierung. Dabei ist erfindungsgemäß aber keine individuelle Kanalcodierung vorgesehen, sondern lediglich eine Unterscheidbarkeit zwischen dem Synchronisationssignal und dem auf allen Kanälen gleichermaßen verwendeten Objekterkennungssignal. Im Prinzip genügt ein einziger Puls für das Synchronisationssignal und ein längerer Puls oder ein Doppelpuls für das Objekterkennungssignal. Selbstverständlich sind andere Codierungsschemata möglich.

Die Sendersteuerung ist bevorzugt dafür ausgebildet, das Sendemuster aus gemeinsamem Synchronisierungssignal und zueinander zeitversetzten Objekterkennungssignalen zyklisch zu wiederholen, wobei insbesondere das Synchronisierungssignal jeweils am Zyklusbeginn ausgesandt wird. Die Sendeeinheit sendet dabei beispielsweise zunächst das gleichzeitige Synchronisationssignal auf allen Kanälen und anschließend zeitversetzt auf jedem Kanal je einmal das Objekterkennungssignal aus, woraufhin der Zyklus wiederholt wird.

Die Auswertungseinheit ist bevorzugt dafür ausgebildet, vor der Synchronisierung mit mehreren, insbesondere allen Einzellichtempfängern gleichzeitig Lichtstrahlen zu empfangen. Solange also noch keine Synchronisation erfolgt, lauscht die Empfangseinheit mit mehreren oder allen Einzellichtempfängern.

Die Auswertungseinheit synchronisiert sich bevorzugt mit der Sendersteuerung, indem sie den Beginn eines Erkennungszyklus' aus dem Empfangszeitpunkt des auf einem beliebigen Einzellichtempfänger empfangenen Synchronisierungssignals bestimmt. Sobald das Synchronisationssignal auf zumindest einem Kanal empfangen wurde, ist die Synchronisation erfolgreich. Der Zyklusbeginn wird dazu auf den Zeitpunkt des Synchronisationssignals gesetzt, wobei noch ein konstantes zeitliches Offset berücksichtigt werden kann, falls das Synchronisationssignal nicht am Beginn des Zyklus' liegt.

Die Auswertungseinheit ist bevorzugt dafür ausgebildet, nach der Synchronisierung nur noch selektiv denjenigen Einzellichtempfänger zu aktivieren, dessen zugehöriger Einzellichtsender in dem jeweiligen Zeitintervall ein Objekterkennungssignal sendet. Dabei werden die Kanäle zyklisch durchgefahren, indem per Zeitmultiplexing nur der Einzellichtempfänger aktiviert wird, von dessen zugehörigem Einzellichtsender ein Signal erwartet wird. Damit wird ausgeschlossen, dass ein Einzellichtempfänger fälschlich das Signal eines anderen als des zugeordneten Einzellichtsenders registriert und somit ein Objekt im eigenen Lichtstrahl übersieht. Es genügt, den Zyklus an sich zu synchronisieren, da das Zeitverhalten innerhalb eines Zyklus' für das Lichtgitter schon vorab vorgegeben werden kann, so dass der Auswertungseinheit also schon a priori bekannt ist, in welchen Zeitfenstern die Sendeeinheit welchen Einzellichtsender aktiviert.

Das Lichtgitter ist vorzugsweise als messendes Lichtgitter ausgebildet, indem von der Auswertungseinheit ein Messsignal ausgebbar ist, welches eine Objektausdehnung angibt, die aus den als unterbrochen erkannten Lichtstrahlen bestimmt ist. Anders als bei einem nur schaltenden Lichtgitter wird dabei ausgewertet, welche Strahlen unterbrochen sind, oder beispielsweise welches der höchstgelegene unterbrochene Strahl ist. Damit kann in einer Dimension eine Objektausdehnung gemessen werden, bei entsprechender Montage des Lichtgitters häufig die Objekthöhe, ganz allgemein die Objektausdehnung senkrecht zu den Einzelstrahlen in der von den Strahlen aufgespannten Ebene.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Schnittdarstellung eines Lichtgitters;
- Fig. 2: eine erfindungsgemäße Ausführungsform des zeitlichen Verlaufs der Sendemuster in den Kanälen eines Lichtgitters gemäß Figur 1; und
- Fig. 3: ein beispielhafter zeitlicher Verlauf der Empfangsmuster bei einem Sendemuster gemäß Figur 2.

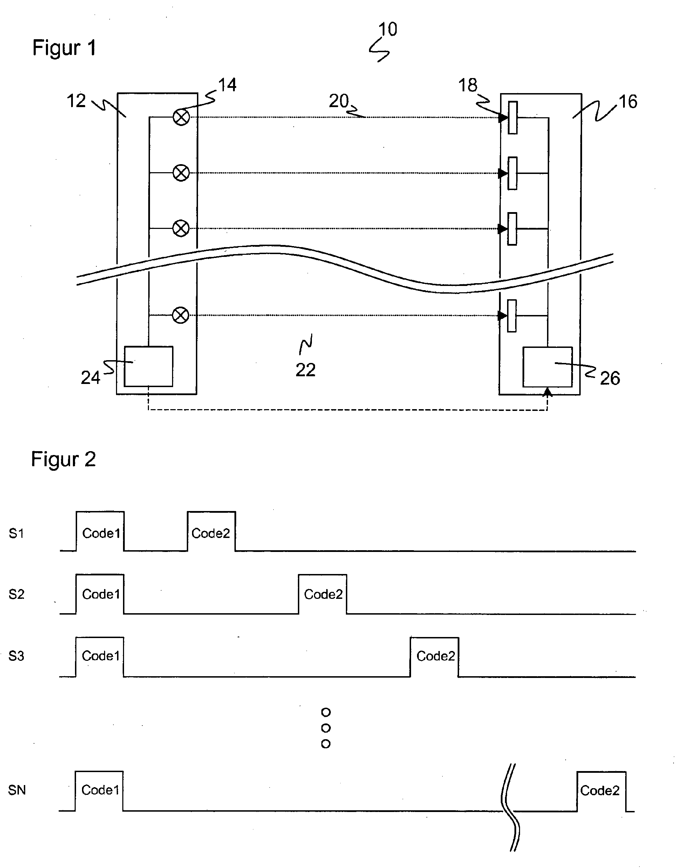

Figur 1 zeigt eine schematische Blockdarstellung eines Lichtgitters 10. Eine Sendeeinheit 12 mit einer Vielzahl von Lichtsendern 14 und eine Empfangseinheit 16 mit einer Vielzahl von Lichtempfängern 18 sind einander gegenüberstehend angeordnet. Von den Lichtsendern 14 ist jeweils ein Lichtstrahl 20 zu einem zugeordneten Lichtempfänger 18 aufgespannt. Somit spannt das Lichtgitter 10 eine Vielzahl von Lichtstrahlen 20 oder Kanälen auf, um Objekte in einem Überwachungsbereich 22 zwischen der Sendeeinheit 12 und der Empfangseinheit 16 zu erkennen. Dabei kann den Lichtsendern 14 und den Lichtempfängern 18 abweichend von der Darstellung eine Optik samt Blenden oder dergleichen zugeordnet sein, um den Lichtstrahl 20 zu formen beziehungsweise gezielt und nur innerhalb einer bestimmten Empfangskeule auf einen Lichtempfänger 18 zu lenken.

In der Sendeeinheit 12 ist eine Sendersteuerung 24 direkt oder mittelbar mit allen Lichtsendern 14 verbunden, um deren Aktivität zu steuern und sie dazu zu veranlassen, bestimmte Signalformen auszusenden. Als Gegenstück ist in der Empfangseinheit 16 eine Auswertungseinheit 26 vorgesehen, die direkt oder mittelbar mit allen Lichtempfängern 18 verbunden ist, um die Empfangssignale auszuwerten. Anhand der Empfangssignale erkennt die Auswertungseinheit 26, welche Lichtstrahlen 20 unterbrochen sind und welche nicht.

Gemäß dem einleitend beschriebenen Objekterkennungsverfahren strahlen die Lichtsender 14 nicht im Dauerbetrieb, sondern sie werden zyklisch nacheinander aktiviert, um Mehrdeutigkeiten in der Empfangseinheit 16 zu vermeiden. Dazu werden Sendersteuerung 24 und Auswertungseinheit 26 optisch synchronisiert, wie durch eine gestrichelte Linie angedeutet.

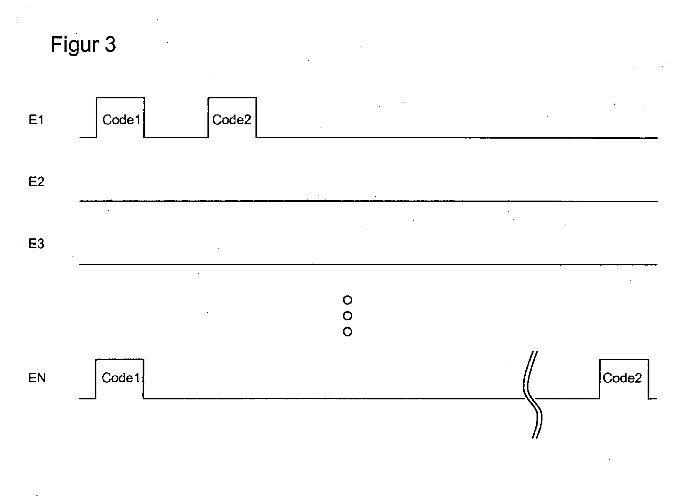

Die erfindungsgemäße optische Synchronisation wird nun anhand der Figuren 2 und 3 erläutert. Figur 2 zeigt den zeitlichen Verlauf der Sendemuster S1...SN in den einzelnen Kanälen, und Figur 3 einen beispielhaften zeitlichen Verlauf der Empfangsmuster E1...EN in den einzelnen Kanälen.

Der Lichtsender 14 senden in einer beispielhaften Ausführungsform der Erfindung kontinuierlich das in Figur 2 dargestellte Sendemuster. Der Zyklusanfang wird durch ein Synchronisationssignal beziehungsweise Zyklusanfangssignal in Form einer eindeutigen Pulsfolge Code1 signalisiert. Das Synchronisationssignal wird auf allen Lichtsendern 14 gleichzeitig gesendet. Darauf folgt in jedem Lichtsender 14 mit einem individuellen Zeitversatz ein Objekterkennungssignal Code2. Beispielsweise wird wie in Figur 2 das Objekterkennungssignal zuerst in dem ersten Kanal S1 und dann zeitversetzt nacheinander in den Kanälen S2, S3, ..., SN gesendet. Das Objekterkennungssignal kann anhand seiner Pulsform von dem Synchronisationssignal unterschieden werden. Weitere Anforderungen an das Synchronisationssignal und das Objekterkennungssignal sind nicht gestellt.

Solange die Auswertungseinheit 26 nicht synchronisiert ist, sorgt sie dafür, dass alle Lichtempfänger 18 gleichzeitig empfangen. Figur 3 zeigt ein beispielhaftes Empfangsmuster E1...EN, wenn ein Objekt den Strahlengang in allen außer den äußersten Kanälen K1 und KN unterbricht. Die Auswertungseinheit 26 prüft, ob in zumindest einem Kanal Ki das Synchronisationssignal empfangen werden konnte. Wenn das gelingt, ist der Empfangseinheit 16 somit der Zeitpunkt des Zyklusanfangs bekannt, die Synchronisation war erfolgreich.

Hierbei kann es aufgrund von Überstrahlungen ohne Weiteres dazu kommen, dass ein Lichtempfänger 18 das Sendelicht von mehreren Lichtsendern 14 empfängt. Das begünstigt das Verfahren, denn zur Synchronisation kommt es nicht darauf an, das Synchronisationssignal von einem bestimmten Lichtsender 14 zu empfangen, sondern es überhaupt zu registrieren, um seinen Zeitpunkt festzustellen.

Nach der Synchronisation geht die Auswertungseinheit 26 in die Betriebsphase über. Damit wird nur noch selektiv derjenige Lichtempfänger 18 aktiviert oder ausgewertet, dessen zugeordneter Lichtsender 14 im selben Kanal aktuell sein Objekterkennungssignal aussendet. Aufgrund der Synchronisation sind diese Zeitfenster der Auswertungseinheit 26 bekannt. Die zyklische Auswertung des Lichtgitters 10 erfolgt deshalb mit dem richtigen Zeitverhalten.

Die Kommunikation ist dabei in der Regel unidirektional. Sofern nämlich doch auch eine Kommunikation in Rückwärtsrichtung möglich ist, wird es meist einfacher sein, diesen Kommunikationsweg für die Synchronisation zu nutzen. Die Sendersteuerung 24 weiß demnach nicht, ob und wann eine Synchronisation erfolgt. Dabei sind im Grunde vor der Synchronisation die zueinander zeitversetzten Objekterkennungssignale und danach die gleichzeitigen Synchronisationssignale überflüssig. Da die Sendersteuerung 24 darüber aber keine Information hat, sendet sie ständig und unverändert das in Figur 2 gezeigte Sendemuster aus.

## Patentansprüche

1. Lichtgitter (10) mit einer Sendeeinheit (12), die eine Vielzahl von Einzellichtsendern (14) und eine Sendersteuerung (24) zur Aktivierung der Einzellichtsender (14) aufweist, und mit einer Empfangseinheit (16), die eine den Einzellichtsendern (14) entsprechende Vielzahl von Einzellichtempfängern (18) und eine mit den Einzellichtempfängern (18) verbundene Auswertungseinheit (26) aufweist, wobei von der Auswertungseinheit (26) eine Unterbrechung eines Lichtstrahls (20) von einem Einzellichtsender (14) zu einem zugehörigen Einzellichtempfänger (18) erkennbar ist und die Auswertungseinheit (26) mit der Sendersteuerung (24) mit Hilfe der Lichtstrahlen (20) optisch synchronisierbar ist
die Sendersteuerung (24) dafür ausgebildet ist, ein Synchronisierungssignal parallel auf mehreren Einzellichtsendern (14) auszusenden **dadurch gekennzeichnet dass** die Auswertungseinheit (26) dafür ausgebildet ist, sich mit der Sendersteuerung (24) zu synchronisieren, indem sie den Beginn eines Erkennungszyklus' aus dem Empfangszeitpunkt des auf einem beliebigen Einzellichtempfänger (18) empfangenen Synchronisierungssignals bestimmt und weiterhin dafür ausgebildet ist mit mehreren Einzellichtempfängern (18) gleichzeitig Lichtstrahlen (20) zu empfangen, solange die Auswertungseinheit (26) nicht mit der Sendersteuerung (24) synchronisiert ist.

2. Lichtgitter nach Anspruch 1,
wobei die Sendersteuerung (24) dafür ausgebildet ist, das Synchronisierungssignal parallel auf allen Einzellichtsendern (14) auszusenden und /oder wobei die Auswertungseinheit (26) dafür ausgebildet ist, mit allen Einzellichtempfängern (18) gleichzeitig Lichtstrahlen (20) zu empfangen, solange die Auswertungseinheit (26) nicht mit der Sendersteuerung (24) synchronisiert ist.

3. Lichtgitter (10) nach Anspruch 1 oder 2,
wobei die Sendersteuerung (24) dafür ausgebildet ist, mit den Einzellichtsendern (14) jeweils ein Objekterkennungssignal mit einem für jeden Einzellichtsender (14) unterschiedlichen Zeitversatz zu dem Synchronisierungssignal auszusenden.

4. Lichtgitter (10) nach Anspruch 3,
wobei das Sendesignal des i-ten Einzellichtsenders (14) das Synchronisierungssignal und ein hierzu um i Zeiteinheiten verzögertes Objekterkennungssignal aufweist.

5. Lichtgitter (10) nach einem der vorhergehenden Ansprüche,
wobei die Signalform des Synchronisierungssignals und/oder des Objekterkennungssignals für alle Einzellichtsender (14) identisch ist.

6. Lichtgitter (10) nach einem Ansprüche 3 bis 5,
wobei die Sendersteuerung (24) dafür ausgebildet ist, das Sendemuster aus gemeinsamem Synchronisierungssignal und zueinander zeitversetzten Objekterkennungssignalen zyklisch zu wiederholen.

7. Lichtgitter (10) nach Anspruch 6,
wobei das Synchronisierungssignal jeweils am Zyklusbeginn ausgesandt wird.

8. Lichtgitter (10) nach einem der vorhergehenden Ansprüche,
wobei die Auswertungseinheit (26) dafür ausgebildet ist, nach der Synchronisierung nur noch selektiv denjenigen Einzellichtempfänger (18) zu aktivieren, dessen zugehöriger Einzellichtsender (14) in dem jeweiligen Zeitintervall ein Objekterkennungssignal sendet.

9. Lichtgitter (10) nach einem der vorhergehenden Ansprüche,
das als messendes Lichtgitter ausgebildet ist, indem von der Auswertungseinheit (26) ein Messsignal ausgebbar ist, welches eine Objektausdehnung angibt, die aus den als unterbrochen erkannten Lichtstrahlen (20) bestimmt ist.

10. Verfahren zur Objektvermessung mit einem Lichtgitter (10), wobei geprüft wird, welche aus einer Vielzahl zwischen jeweils einem Einzellichtsender (14) und einem Einzellichtempfänger (18) aufgespannter Lichtstrahlen (20) durch das Objekt unterbrochen werden und wobei eine optische Synchronisation zwischen einer Sendersteuerung (24) der Einzellichtsender (14) und einer Auswertungseinheit (26) der Einzellichtempfänger (18) erfolgt, und
ein Synchronisationssignal parallel auf mehreren, insbesondere allen Einzellichtsendern (14) ausgesandt wird, **dadurch gekennzeichnet dass** die Synchronisation zwischen Sendersteuerung (24) und Auswertungseinheit (26) erfolgt, indem die Auswertungseinheit (26) den Beginn eines Erkennungszyklus' aus dem Empfangszeitpunkt des auf einem beliebigen Einzellichtempfänger (18) empfangenen Synchronisierungssignals bestimmt und dass mit mehreren Einzellichtempfängern (18) gleichzeitig Lichtstrahlen (20) empfangen werden, solange die Auswertungseinheit (26) nicht mit der Sendersteuerung (24) synchronisiert ist.

## Claims

1. A light grid (10) with a transmission unit (12) comprising a plurality of individual light transmitters (14) and a transmitter control (24) for activating the individual light transmitters (14), and with a reception unit (16) comprising a plurality of individual light receivers (18) corresponding to the individual light transmitters (14) and comprising an evaluation unit (26) connected to the individual light receivers (18), wherein the evaluation unit (26) is configured to detect an interruption of a light beam (20) from an individual light transmitter (14) to a corresponding individual light receiver (18) and to be optically synchronized with the transmitter control (24) by means of the light beams (20), wherein the transmitter control (24) is configured to transmit a synchronization signal on multiple individual light transmitters (14) in parallel,
**characterized in that**
the evaluation unit (26) is configured to synchronize with the transmitter control (24) by determining the beginning of a detection cycle from the reception point in time of the synchronization signal received on any one of the individual light receivers (18) and is further configured to simultaneously receive light beams (20) via multiple individual light receivers (18) as long as the evaluation unit (26) is not synchronized with the transmitter control (24).

2. The light grid (10) of claim 1,
wherein the transmitter control (24) is configured to transmit the synchronization signal on all individual light transmitters (14) in parallel and/or wherein the evaluation unit (26) is configured to receive light beams (20) with all individual light receivers (18) at the same time as long as the evaluation unit (26) is not synchronized with the transmitter control (24).

3. The light grid (10) of claim 1 or 2,
wherein the transmitter control (24) is configured to transmit via the individual light transmitters (14) a respective object detection signal with a different time offset to the synchronization signal for each individual light transmitter (14).

4. The light grid (10) of claim 3,
wherein the transmission signal of the i^{th} individual light transmitter (14) comprises the synchronization signal and an object detection signal offset from the synchronization signal by i time units.

5. The light grid (10) of any of the preceding claims,
wherein the signal shape of the synchronization signal and/or of the object detection signal is the same for all individual light transmitters (14).

6. The light grid (10) of any of claim 3 to 5,
wherein the transmitter control (24) is configured to cyclically repeat the transmission pattern of common synchronization signal and mutually time offset object detection signals.

7. The light grid (10) of claim 6,
wherein the synchronization signal is transmitted at the beginning of each cycle.

8. The light grid (10) of any of the preceding claims,
wherein the evaluation unit (26) is configured to, after the synchronization, selectively activate only the respective individual light receiver (18) whose corresponding individual light transmitter (14) is transmitting an object detection signal in the respective time interval.

9. The light grid (10) of any of the preceding claims,
that is made as a measuring light grid in that the evaluation unit (26) is configured to output a measuring signal including an object dimension determined from the light beams (20) that were detected as interrupted.

10. A method for object measurement with a light grid (10), wherein it is evaluated which of a plurality of light beams (20), each formed between an individual light transmitter (14) and an individual light receiver (18), is interrupted by the object, and wherein a transmitter control (24) of the individual light transmitters (14) and an evaluation unit (26) of the individual light receivers (18) are synchronized with each other, and wherein a synchronization signal is transmitted by multiple, in particular all individual light transmitters (14) in parallel, **characterized in that** the transmitter control (24) and the evaluation unit (26) are synchronized by the evaluation unit (26) determining the beginning of a detection cycle from the reception point in time of the synchronization signal received on any one of the individual light receivers (18) and **in that** light beams (20) are simultaneously received via multiple individual light receivers (18) as long as the evaluation unit (26) is not synchronized with the transmitter control (24).

## Revendications

1. Barrière lumineuse (10) comprenant une unité émettrice (12), qui comprend une pluralité d'émetteurs de lumière individuels (14) et une commande d'émission (24) pour activer les émetteurs de lumière individuels (14), et comprenant une unité réceptrice (16) qui comprend une pluralité de récepteurs de lumière individuels (18) correspondant aux émetteurs de lumière individuels (14), et une unité d'évaluation (26) reliée aux récepteurs de lumière individuels (18), dans laquelle une interruption d'un rayon de lumière (20) allant d'un émetteur de lumière individuel (14) à un récepteur de lumière individuel (18) associé peut être reconnue par l'unité d'évaluation (26) et l'unité d'évaluation (26) est susceptible d'être synchronisée par voie optique avec la commande d'émission (24) avec l'aide des rayons de lumière (20), la commande d'émission (24) est réalisée pour émettre un signal de synchronisation en parallèle vers plusieurs émetteurs de lumière individuels (14), **caractérisée en ce que** l'unité d'évaluation (26) est réalisée pour se synchroniser avec la commande d'émission (24) **en ce qu'**elle détermine le commencement d'un cycle de reconnaissance à partir de l'instant de réception du signal de synchronisation reçu sur un quelconque récepteur de lumière individuel (18), et est en outre réalisée pour recevoir simultanément des rayons de lumière (20) avec plusieurs récepteurs de lumière individuels aussi longtemps que l'unité d'évaluation (26) n'est pas synchronisée avec la commande d'émission (24).

2. Barrière lumineuse selon la revendication 1,
dans laquelle la commande d'émission (24) est réalisée pour émettre le signal de synchronisation en parallèle vers tous les émetteurs de lumière individuels (14) et/ou dans laquelle l'unité d'évaluation (26) est réalisée pour recevoir simultanément des rayons de lumière (20) avec tous les récepteurs de lumière individuels (18) aussi longtemps que l'unité d'évaluation (26) n'est pas synchronisée avec la commande d'émission (24).

3. Barrière lumineuse (10) selon la revendication 1 ou 2,
dans laquelle la commande d'émission (24) est réalisée pour émettre avec les émetteurs de lumière individuels (14) respectivement un signal de reconnaissance d'objet avec un décalage temporel par rapport au signal de synchronisation différent pour chaque émetteur de lumière individuel (14).

4. Barrière lumineuse (10) selon la revendication 3,
dans laquelle le signal d'émission du i-ième émetteur de lumière individuel (14) comprend le signal de synchronisation et un signal de reconnaissance d'objet retardé de i unités temporelles par rapport à celui-ci.

5. Barrière lumineuse (10) selon l'une des revendications précédentes, dans lequel la forme du signal de synchronisation et/ou du signal de reconnaissance d'objet est identique pour tous les émetteurs de lumière individuels (14).

6. Barrière lumineuse (10) selon l'une des revendications 3 à 5,
dans lequel la commande d'émission (24) est réalisée pour répéter de manière cyclique le motif d'émission constitué du signal de synchronisation commun et de signaux de reconnaissance d'objets décalés dans le temps les uns par rapport aux autres

7. Barrière lumineuse (10) selon la revendication 6,
dans lequel le signal de synchronisation est émis respectivement au commencement d'un cycle.

8. Barrière lumineuse (10) selon l'une des revendications précédentes, dans laquelle l'unité d'évaluation (26) est réalisée pour, après la synchronisation, activer de manière sélective uniquement ceux des récepteurs de lumière individuels dont l'émetteur de lumière individuel associé (14) émet un signal de reconnaissance d'objet dans l'intervalle temporel respectif.

9. Barrière lumineuse (10) selon l'une des revendications précédentes, qui est réalisée comme barrière lumineuse à fonction de mesure, en ce qu'un signal de mesure peut être délivré par l'unité d'évaluation (26), signal qui indique l'extension d'un objet, laquelle est déterminée à partir des rayons lumineux (20) reconnus comme n'étant pas interrompus.

10. Procédé pour la mesure d'objets avec une barrière lumineuse (10), dans lequel on vérifie, parmi une pluralité de rayons de lumière (20) tendus entre respectivement un émetteur de lumière individuel (14) et un récepteur de lumière individuel (18), ceux qui sont interrompus par l'objet, et dans lequel il se produit une synchronisation optique entre une commande d'émission (24) des émetteurs de lumière individuels (14) et une unité d'évaluation (26) des récepteurs de lumière individuels (18), et un signal de synchronisation est émis en parallèle vers plusieurs émetteurs de lumière individuels (14), en particulier vers tous les émetteurs de lumière individuels (14),
**caractérisé en ce que** la synchronisation entre la commande d'émission (24) et l'unité d'évaluation (26) a lieu **en ce que** l'unité d'évaluation (26) détermine le commencement d'un cycle de reconnaissance à partir de l'instant de réception du signal de synchronisation reçu sur un quelconque récepteur de lumière individuel (18), et **en ce que** l'on reçoit simultanément des rayons de lumière (20) avec plusieurs récepteurs de lumière individuels (18) aussi longtemps que l'unité d'évaluation (26) n'est pas synchronisée avec la commande d'émission (24).
